# EUROPEAN PATENT SPECIFICATION

(11) **EP 2 768 716 B1**
(45) Date of publication and mention of the grant of the patent: **16.05.2018**
(21) Application number: 12841959.5
(22) Date of filing: 19.10.2012
(51) Int. Cl.: B62D 1/19, B60R 21/05, B62J 27/00, B60R 19/00, B62D 61/08, B62K 5/025

(54) **STEERING ARRANGEMENT FOR VEHICLE**
LENKVORRICHTUNG FÜR EIN FAHRZEUG
SYSTÈME DE DIRECTION POUR VÉHICULE

(30) Priority: 21.10.2011 SE 1100782
(43) Date of publication of application: 27.08.2014
(73) Proprietor: Clean Motion AB, 443 38 Lerum (SE)
(72) Inventor: FOLKESSON, Göran, S-443 38 Lerum (SE); FOLKESSON, Hans, S-443 32 Lerum (SE); HÅLAND, Yngve, S-239 40 Falsterbo (SE)
(74) Representative: Awapatent AB
(86) International application number: PCT/SE2012/000164
(87) International publication number: WO 2013/058694

(56) References cited:
- EP-A1- 0 321 676
- WO-A1-98/24681
- WO-A1-2008/081218
- DE-A1- 3 817 672
- DE-A1- 4 013 808
- DE-A1- 10 309 328
- FR-A1- 2 645 819
- US-A- 3 578 782
- US-A- 4 311 335
- US-A- 4 325 448
- US-A- 4 413 702
- US-A- 4 593 785
- US-A- 4 973 082
- US-A- 6 032 981
- US-A1- 2002 125 710
- US-B1- 6 276 480

## Description

### Field of the invention.

The present invention relates to a steering arrangement for a vehicle with three wheels, where the upper part of the steering arrangement can move forward, seen in the normal direction of travel of the vehicle, to reduce the risk of injury to a driver.

### Background of the invention.

It is commonly known from for example vehicles with two wheels, such as motorbikes, to have the steering arrangement at the front section of the vehicle and that the steering arrangement constitutes a unit with the front wheel of the vehicle. The support structure of the vehicle has commonly a tube section, in which a part of the steering arrangement is situated. The tube section is not moveable in relation to the support structure of the vehicle. At the open end sections of the tube section bearings are arranged, so that the section of the steering arrangement in the tube section easily can be turned in relation to the tube section. The upper part of the steering arrangement, normally a handlebar, cannot move in the longitudinal direction of the vehicle.

From the publication US 4,311,335 it is known to equip a driver of a light vehicle, such as a motorbike, with an arrangement holding the driver in position in a seat assembly. In a frontal collision the seat assembly will move forward, seen in the normal direction of travel of the vehicle. At the forward movement of the seat assembly, the seat assembly will affect sections of upper part of the steering arrangement, such as parts of the handlebar, so that parts of the handlebar will move forward. That will be obtained as the handlebar is turning in it's holding arrangement at the steering arrangement. The seat assembly with the driver is pushing the handlebar forward.

Publication US 4,798,399 is showing and describing a three-wheel vehicle with a safety cage, which will protect the driver in an accident. To keep the driver in position in the safety cage the driver area has a safety belt, which is fixed to the safety cage.

Form the publication DE 33 37 231 it is known to pull forward the steering wheel in a vehicle, seen in the normal direction of travel of the vehicle, away from the driver, to reduce the risk of injury to the driver. The steering wheel is pulled forward as the steering wheel is connected to a part in the front section of the vehicle, for example the vehicle engine, which will move towards the rear in a frontal collision. The movement towards the rear of the steering wheel is obtained as the part in the front section of the vehicle is connected to the steering wheel by for example a wire.

The publication DE 40 13 808 is describing a motorbike, where the steering arrangement is fixed to the frame of the support structure by link arms and when the front wheel is moving towards the rear in a frontal collision the upper part of the steering arrangement is moving forward at the same time as the seat is moving upwards from the support structure.

A steering arrangement like described in the preamble of claim 1 is known from the document US 2002/0125710 A1.

### Summary of the invention.

The purpose of the invention is to obtain a steering arrangement for three-wheel vehicles, which will reduce the risk of injury to a driver in a frontal collision. The steering arrangement according to claim 1 is designed such that the upper part of the steering arrangement will move forward, seen in the normal direction of travel of the vehicle, away from the driver, in a frontal collision. With a steering arrangement according to the invention the risk is reduced for a belted driver to be in contact with the steering arrangement of the vehicle. That is obtained by the steering arrangement being a rigid unit and that the fixation of the steering arrangement to the support structure of the vehicle contains a fixing arrangement where the fixing arrangement is resting on the support structure on that side of the support structure of the vehicle which is towards the front wheel of the vehicle and that the fixing arrangement has at least one deformable arrangement. A steering arrangement with a fixing arrangement according to the invention makes a very light and a very simple fixation of the steering arrangement which is very cost effective. To obtain good safety the driver area of the vehicle has to be equipped with a safety device, such as a safety belt, which will reduce the forward movement of the driver in a frontal collision.

### Brief description of the drawings.

With reference to the attached drawings detailed descriptions of preferred embodiments of the invention will be presented as examples.

On the drawings are shown in
figure 1 a vehicle where a part of the front section of the vehicle has been deleted,
figure 2 the vehicle with the embodiment according to figure 1 after a frontal collision,
figure 3 a view of the steering arrangement according to section A - A in figure 1,
figure 4 an embodiment of the fixation of the steering arrangement to the support structure of the vehicle, where the steering arrangement has a fixation plate,
figure 5 the vehicle with the embodiment according to figure 4 after a frontal collision and
figure 6 the vehicle with the embodiment according to figure 4 where an activation arrangement activates the deformable fastening elements.

### Detailed description of the preferred embodiments.

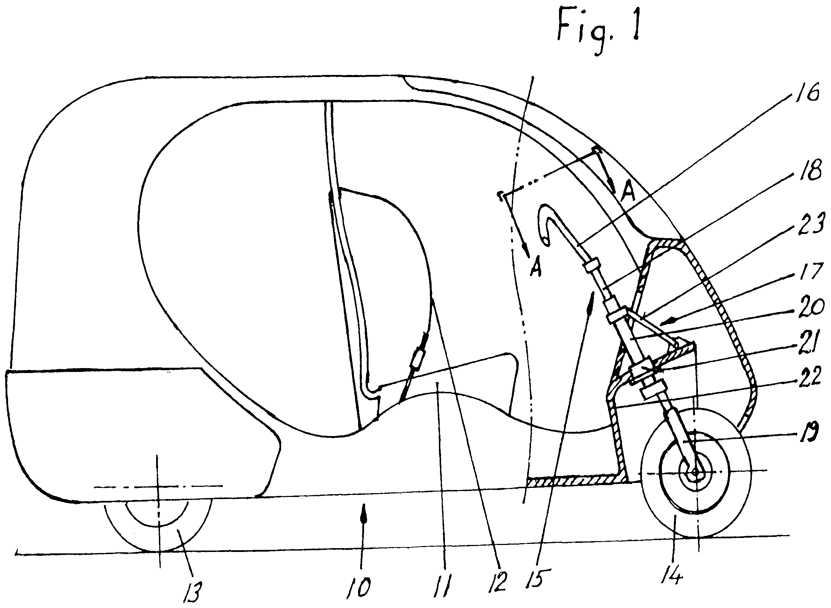

Figure 1 shows a small and light vehicle (10), in the form of a three-wheel vehicle, with a driver area (11), where the driver area (11) is equipped with a safety belt (12). The vehicle (10) has two wheels (13) at the rear section of the vehicle (10) and one wheel (14) at the front section of the vehicle (10). The front wheel (14) is part of the steering arrangement (15) for the vehicle (10). The steering arrangement (15) for the vehicle (10) consist in addition to the front wheel (14) of the vehicle (10) of a top section (16), with which the driver manoeuvres the steering arrangement (15), and an intermediate part (18), such as an axle, and a wheel attachment (19). The top section (16) of the steering arrangement (15) is in the shown embodiment a handlebar, but may be a steering wheel. The steering arrangement (15) also consists of a fixing arrangement (17) which secures the steering arrangement (15) to the support frame (22) of the vehicle (10). The fixing arrangement (17) is situated between the top section (16) of the steering arrangement (15) and the wheel attachment (19). The intermediate part (18) of the steering arrangement (15) runs through the fixing arrangement (17) and is held in the fixing arrangement (17) so that it can be turned. The section of the fixing arrangement (17) where the intermediate part (18) is held can be in the form of a hollow body (20), such as a tube. The top section (16) of the steering arrangement (15), the intermediate part (18), the wheel attachment (19) and the front wheel (14) constitute a rigid unit.

In the embodiment shown in figure 1 the fixing arrangement (17) consist of the hollow body (20) and a fixing element, in the shown embodiment a fixing component (21), as well as a deformation arrangement, in the shown embodiment a brace arrangement (23). The fixing component (21) is arranged at that part of the hollow body (20) which is towards the front wheel (14) of the vehicle (10) and the brace arrangement (23) is between the top section of the hollow body (20), which is towards the top section (16) of the steering arrangement (15), and a section of the support structure (22) of the vehicle (10). The steering arrangement (15) with a preferred mainly vertical direction is fixed to the support structure (22) of the vehicle (10) by the fixing component (21) and the brace arrangement (23). In a frontal collision the front section of the vehicle (10) and the front wheel (14) of the vehicle (10) are pushed towards the rear, seen in the normal direction of travel of the vehicle. When the front wheel (14) of the vehicle (10) is pushed towards the rear the brace arrangement (23) will take the load and at a predetermined load the brace arrangement (23) will deform and the front wheel (14) moves towards the rear under energy absorption. The fixing component (21) is so attached to the support structure (22) of the vehicle (10) that the fixing component (21) can only undertake minor movements, mainly perpendicular to the normal direction of travel of the vehicle (10). In the shown embodiment the support structure (22) of the vehicle (10) is manufactured of a plastic material and the plastic material permits a minor movement of the fixing component (21). As a result of the front wheel (14) of the vehicle (10) moving towards the rear, seen in the normal direction of travel of the vehicle, the brace arrangements (23) deformation and the minor movement of the fixing component (21) in the support structure (22) of the vehicle (10) the top section (16) of the steering arrangement (15) will move forward, seen in the normal direction of travel of the vehicle (10).

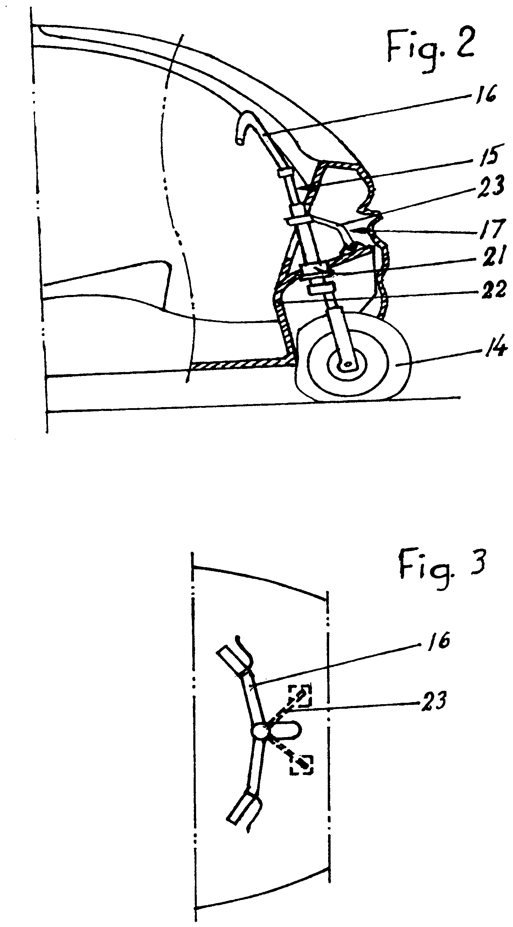

Figure 2 shows the position of the steering arrangement (15) after a frontal collision. With the vehicle (10) equipped with a safety belt (12) which will reduce the forward movement of the driver and with the top section (16) of the steering arrangement (15) moved forward, away from the driver, the risk for injury to the driver is reduced in a frontal collision, specifically injuries to the head of the driver caused by the top section (16) of the steering arrangement (15). The distance that the top section (16) of the steering arrangement (15) can move forward is decided by the position of the fixing arrangement (17) in relation to the front wheel (14) of the vehicle (10) and the position of the fixing arrangement (17) in relation to the support structure (22) of the vehicle (10). To make it possible for the brace arrangement (23) to maintain the steering arrangement (15) in the preferred position during normal usage of the vehicle (10), when forces in the longitudinal direction of the vehicle (10) may occur, for example when hitting a curb, and forces transverse to the longitudinal direction of the vehicle (10), for example during braking when turning, but to deform at a predetermined force it is necessary to use two brace elements, which are arranged in an angle to each other, as shown in figure 3. By placing the brace elements forward, seen in the normal direction of travel of the vehicle, the brace elements will bend, which will give a controlled movement of the top section (16) of the steering arrangement (15) after the front wheel (14) of the vehicle (10) has begun the movement towards the rear. In the shown embodiment the brace arrangement (23) is fixed directly to the support structure (22) of the vehicle (10), but in a special embodiment, the brace arrangement (23) can form a unit with the fixing component (21) and the unit can be fixed to the support structure (22) of the vehicle (10), which will result in a more easy mounting of the steering arrangement (15) to the support structure (22) of the vehicle (10). With the top section (16) of the steering arrangement (15), the intermediate part (18), the wheel attachment (19) and the front wheel (14) constituting a rigid unit and with the fixation of the steering arrangement (15) to the support structure (22) of the vehicle (10) via the fixing arrangement (17) of the steering arrangement (15) where the fixing arrangement (17) has a deformable arrangement in the shape of a brace arrangement (23) the top section (16) of the steering arrangement (15) will move forward when the front wheel (14) of the vehicle (10) is moving towards the rear.

When the support structure (22) of the vehicle (10) is of a plastic material it can be necessary for the fixing component (21) to have a section which is resting against the support structure (22) of the vehicle (10) on that side which is towards the front wheel (14) of the vehicle (10), so that the force from the front wheel (14) of the vehicle (10) is taken up by the support structure (22) of the vehicle (10) as a pressure force.

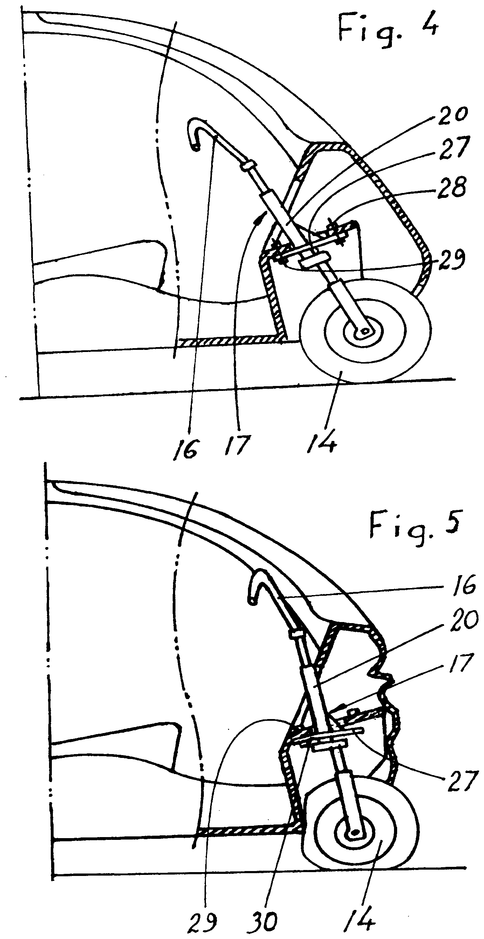

Figure 4 is showing an embodiment of the fixing arrangement (17) of the steering arrangement (15), where the fixing arrangement (17) consists of a hollow body (20) and a fixing element, in the shown embodiment a plate (27) arranged at that end of the hollow body (20) which is closest to the front wheel (14) of the vehicle (10), mainly perpendicular to the longitudinal direction of the hollow body (20). The plate (27) is fixed to the support structure (22) of the vehicle (10), at that side of the support structure (22) of the vehicle (10) which is towards the front wheel (14) of the vehicle (10), with a deformation arrangement, in the shown embodiment a front fastening (28) containing for example nut and bolt. In the shown embodiment the plate (27) is held against the support structure (22) of the vehicle (10) also by a rear fastening (29). In a front collision the front wheel (14) of the vehicle (10) is pushed towards the rear, seen in the normal direction of travel of the vehicle (10), and as the top section (16) of the steering arrangement (15), the intermediate part (18), the wheel attachment (19) and the front wheel (14) is a rigid unit, the front fastening (28) of the plate (27) will be exposed to a traction force. The front fastening (28) is so designed that it will deform at a pre determined traction force and the forward part of the plate (27) will be released from the support structure (22) of the vehicle (10). When the front wheel (14) of the vehicle (10) is moving towards the rear, seen in the normal direction of travel of the vehicle (10), the plate (27) will be exposed to a bending force in a section (30) situated between the hollow body (20) and the rear fastening (29). The section (30) will deform, whereby the front wheel (14) of the vehicle (10) will move towards the rear, seen in the normal direction of travel of the vehicle (10), and the top section (16) of the steering arrangement (15) will move forward, seen in the normal direction of travel by the vehicle. To obtain a controlled deformation of the section (30), the section (30) can have some form of weakening, such as a groove or recesses. The fixation of the plate (27) to the support structure (22) of the vehicle (10) can be with one or two front fastenings (28) as well as one or two rear fastenings (29), where some part of the front fastenings (28) will deform, so that the plate (27) is released at the front fastenings (28) at the predetermined load. Figure 5 shows the embodiment according to figure 4 after a frontal collision where the front wheel (14) of the vehicle (10) has moved towards the rear, so that the top section (16) of the steering arrangement (15) has moved forward, seen in the normal direction of travel of the vehicle (10). With the top section (16) of the steering arrangement (15), the intermediate part (18), the wheel attachment (19) and the front wheel (14) designed as a rigid unit and with the fixing arrangement (17) of the steering arrangement (15) equipped with deformable arrangements (28, 30), the top section (16) of the steering arrangement (15) will move forward when the front wheel (14) of the vehicle (10) is moving towards the rear.

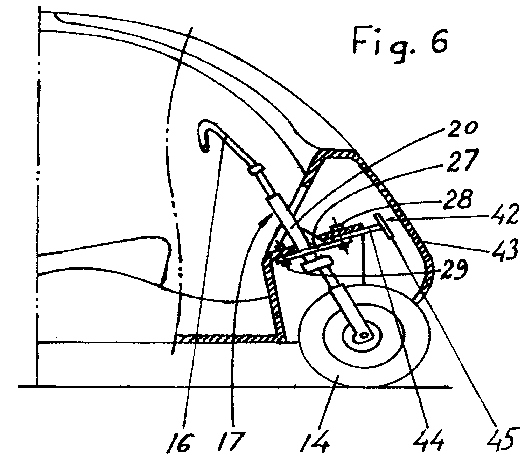

To make sure that the top section (16) of the steering arrangement (15) will move forward, seen in the normal direction of travel of the vehicle (10), even if the front wheel (14) of the vehicle (10) does not immediately move towards the rear in a frontal collision, for example if the collision happens with an object which is a great distance from ground level, can the deformation arrangement on the steering arrangement (15), the brace arrangement (23) and the front fastenings (28), be activated by an activation arrangement (42) which will get into contact with the front section (43) of the vehicle (10) when the front section (43) is deforming. The activation arrangement (42) in the embodiment shown in figure 6 is built together with the plate (27) of the steering arrangement (15) and has a pressure bar (44) and a pressure plate (45). When the front section (43) of the vehicle (10) is moving towards the rear, seen in the normal direction of travel of the vehicle (10), the pressure plate (45) and pressure bar (44) are moving towards the rear and getting in contact with the deformation arrangement, the brace arrangement (23) and the front fastenings (28), which after a predetermined movement of the pressure bar (44) will be activated and will be deformed. At the continued deformation of the front section (43), the front section (43) easily can move the front wheel (14) towards the rear, seen in the normal direction of travel of the vehicle, so that the top section (16) of the steering arrangement (15) is moving forward, seen in the normal direction of travel of the vehicle (10). The activation arrangement may be fixed to the support structure (22) of the vehicle (10).

As the activation arrangement (42) is activated when the front section (43) of the vehicle (10) is deforming in a frontal collision and as the activation arrangement (42) is fixed to the support structure (22) of the vehicle (10) the activation arrangement (42) may be designed with or be a part of an energy absorbing element which will reduce the force acting on the driver of the vehicle (10) in a frontal collision.

With the above described embodiments where the top section (16) of the steering arrangement (15), the intermediate part (18), the wheel attachment (19) and front wheel (14) being a rigid unit and where the steering arrangement (15) is fixed to the support structure (22) of the vehicle (10) via at least one deformable arrangement (23, 28, 30) which will deform in a frontal collision, the top section (16) of the steering arrangement (15) will move forward, seen in the normal direction of travel of the vehicle (10), when the front wheel (14) is moving towards the rear, whereby the risk for injuries to a belted driver is reduced, especially injuries to the head of the driver. A steering arrangement (15) according to the invention will give a very light and a very simple steering arrangement (15) which is very cost effective.

Even if the invention has been described with references to some preferred embodiments the steering arrangement may be modified in many ways within the frame of the present claims.

## Claims

1. Steering arrangement to reduce the risk for injury to a driver of a three-wheel vehicle in a frontal collision, where the vehicle (10) has a support structure (22) with a driver area (11) at the front section of the vehicle (10), in the centre of the vehicle (10), seen perpendicular to the normal direction of travel of the vehicle (10), where the steering arrangement (15) has a mainly vertical direction, where the steering arrangement (15) consists of the vehicle's (10) front wheel (14), a wheel attachment (19), an intermediate part (18), a top section (16), with which the driver manoeuvres the steering arrangement (15) and a fixing arrangement (17), where the fixing arrangement (17) is between the wheel attachment (19) of the steering arrangement (15) and the top section (16) of the steering arrangement (15), where the front wheel (14) of the steering arrangement (15), the wheel attachment (19), the intermediate part (19) and the top section (16) are turnably supported in the fixing arrangement (17) and that the fixing arrangement (17) is fixed to the support structure (22) of the vehicle (10) **characterized by that** the front wheel (14) of the vehicle (10), the wheel attachment (19), the intermediate part (18) and the top section (16) form a rigid unit, that the fixing arrangement (17) has a fixing element (21, 27) arranged at that part of the fixing arrangement (17) which is towards the front wheel (14) of the vehicle (10), mainly perpendicular to the mainly vertical direction of the steering arrangement (15), that the fixing element (21, 27) is supported against the support structure (22) of the vehicle (10) on that side of the support structure (22) of the vehicle (10) which is towards the front wheel (14) of the vehicle (10), that the fixing arrangement (17) has at least one deformable arrangement (23, 28) which deforms when the front wheel (14) of the vehicle (10) is pushed towards the rear, seen in the normal direction of travel of the vehicle, with a force over a predetermined value, so that the top section (16) of the steering arrangement (15) moves forward, seen in the normal direction of travel of the vehicle.

2. Steering arrangement to reduce the risk for injury to a driver of a three-wheel vehicle according to claim 1 **characterized by that** the fixing element at the fixing arrangement (17) consists of a fixing component (21) which is fixed to the support structure (22) of the vehicle (10) in such a way that a minimal movement, mainly perpendicular to the normal direction of travel of the vehicle (10), can take place between the fixing component (21) and the support structure (22) if the vehicle (10).

3. Steering arrangement to reduce the risk for injury to a driver of a three-wheel vehicle according to claim 1 or 2 **characterized by that** the deformable arrangement at the fixing arrangement (17), is a brace arrangement (23) between that part of the fixing arrangement (17) which is towards the top section (16) of the steering arrangement (15) and the support structure (22) of the vehicle (10).

4. Steering arrangement to reduce the risk for injury to a driver of a three-wheel vehicle according to claim 3 **characterized by that** the brace arrangement (23) is arranged in front of that part (20) of the fixing arrangement (17) in which the front wheel (14), the wheel attachment (19), the intermediate part (18) and top section (16) of the steering arrangement (15) are supported, seen in the normal direction of travel of the vehicle (10).

5. Steering arrangement to reduce the risk for injury to a driver of a three-wheel vehicle according to claim 2, 3 or 4 **characterized by that** the fixing component (21) and the fixation of the brace arrangement (23) to the support structure (22) of the vehicle (10) form a unit.

6. Steering arrangement to reduce the risk for injury to a driver of a three-wheel vehicle according to claim 1 **characterized by that** the fixing element at the fixing arrangement (17) consists of a plate (27).

7. Steering arrangement to reduce the risk for injury to a driver of a three-wheel vehicle according to claim 6 **characterized by that** the deformable element at the fixing arrangement (17) is a front fastening (28), arranged between the plate (27) of the fixing arrangement (17) and the support structure (22) of the vehicle (10) in front of that part (20) of the fixing arrangement (17) in which the front wheel (14), the wheel attachment (19), the intermediate part (18) and top section (16) of the steering arrangement (15) are supported, seen in the normal direction of travel of the vehicle (10).

8. Steering arrangement to reduce the risk for injury to a driver of a three-wheel vehicle according to claim 7 **characterized by that** the front fastener (28) contains a nut and bolt arrangement.

9. Steering arrangement to reduce the risk for injury to a driver of a three-wheel vehicle according to any one of the claims 6, 7 or 8 **characterized by that** the plate (27) has a section (30) between the edge section of the plate (27) which is behind that part (20) of the fixing arrangement (17) in which the front wheel (14), the wheel attachment (19, the intermediate part (18) and top section (16) of the steering arrangement (15) are supported, seen in the normal direction of travel of the vehicle (10), and the connection of the plate (27) to that part (20) of the fixing arrangement (17) in which the front wheel (14), the wheel attachment (19, the intermediate part (18) and top section (16) of the steering arrangement (15) are supported, where the section (30) of the plate (27) will deform when the front wheel (14) of the vehicle (10) is moving towards the rear after the front fastening (28) has been deformed.

10. Steering arrangement to reduce the risk for injury to a driver of a three-wheel vehicle according to any of the previous claims **characterized by that** the deformable element (23, 28) which deform when the front wheel (14) of the vehicle (10) is pushed towards the rear, seen in the direction of normal travel of the vehicle, is connected with an activation arrangement (42) which will be activated by the front section (43) of the vehicle (10) in a frontal collision.

11. Steering arrangement to reduce the risk for injury to a driver of a three-wheel vehicle according to claim 10 **characterized by that** the activation arrangement (42) has an energy absorbing section.

12. A three-wheel vehicle with a driver area (11) at the front section of the vehicle (10), in the centre of the vehicle (10), seen perpendicular to the normal direction of travel of the vehicle (10), where the driver area has a steering arrangement (15) **characterized by that** the steering arrangement (15) of the vehicle (10) is according to any of the claims 1 to 11.

## Patentansprüche

1. Lenkvorrichtung zum Verringern der Gefahr einer Verletzung eines Fahrers eines dreirädrigen Fahrzeugs bei einem Frontalaufprall, wobei das Fahrzeug (10) eine Stützstruktur (22) mit einem Fahrerbereich (11) an dem vorderen Abschnitt des Fahrzeugs (10) im Zentrum des Fahrzeugs (10) senkrecht zur normalen Fahrtrichtung des Fahrzeugs (10) gesehen aufweist, wobei die Lenkvorrichtung (15) eine hauptsächlich vertikale Richtung aufweist, wobei die Lenkvorrichtung (15) aus dem Vorderrad (14) des Fahrzeugs (10), einer Radbefestigung (19), einem Zwischenteil (18), einem oberen Abschnitt (16), mit welchem der Fahrer die Lenkvorrichtung (15) steuert, und einer Befestigungsvorrichtung (17) besteht, wobei die Befestigungsvorrichtung (17) zwischen der Radbefestigung (19) der Lenkvorrichtung (15) und dem oberen Abschnitt (16) der Lenkvorrichtung (15) liegt, wobei das Vorderrad (14) der Lenkvorrichtung (15), die Radbefestigung (19), der Zwischenteil (19) und der obere Abschnitt (16) drehbar in der Befestigungsvorrichtung (17) gestützt sind, und die Befestigungsvorrichtung (17) an der Stützstruktur (22) des Fahrzeugs (10) fixiert ist, **dadurch gekennzeichnet, dass** das Vorderrad (14) des Fahrzeugs (10), die Radbefestigung (19), der Zwischenteil (18) und der obere Abschnitt (16) eine starre Einheit bilden, dass die Befestigungsvorrichtung (17) ein Befestigungselement (21, 27) aufweist, das an jenem Teil der Befestigungsvorrichtung (17) angeordnet ist, welcher zu dem Vorderrad (14) des Fahrzeugs (10) hin liegt, hauptsächlich senkrecht zu der hauptsächlich vertikalen Richtung der Lenkvorrichtung (15), dass das Befestigungselement (21, 27) an der Stützstruktur (22) des Fahrzeugs (10) auf jener Seite der Stützstruktur (22) des Fahrzeugs (10) gestützt wird, welche zu dem Vorderrad (14) des Fahrzeugs (10) hin liegt, dass die Befestigungsvorrichtung (17) mindestens eine verformbare Vorrichtung (23, 28) aufweist, welche sich verformt, wenn das Vorderrad (14) des Fahrzeugs (10) in der normalen Fahrtrichtung des Fahrzeugs gesehen mit einer Kraft über einem vorbestimmten Wert nach hinten gedrückt wird, so dass sich der obere Abschnitt (16) der Lenkvorrichtung (15) in der normalen Fahrtrichtung des Fahrzeugs gesehen vorwärts bewegt.

2. Lenkvorrichtung zum Verringern der Gefahr einer Verletzung eines Fahrers eines dreirädrigen Fahrzeugs nach Anspruch 1, **dadurch gekennzeichnet, dass** das Befestigungselement an der Befestigungsvorrichtung (17) aus einer Befestigungskomponente (21) besteht, welche an der Stützstruktur (22) des Fahrzeugs (10) derart fixiert ist, dass eine minimale Bewegung, hauptsächlich senkrecht zu der normalen Fahrtrichtung des Fahrzeugs (10) zwischen der Befestigungskomponente (21) und der Stützstruktur (22) des Fahrzeugs (10) stattfinden kann.

3. Lenkvorrichtung zum Verringern der Gefahr einer Verletzung eines Fahrers eines dreirädrigen Fahrzeugs nach Anspruch 1 oder 2, **dadurch gekennzeichnet, dass** die verformbare Vorrichtung an der Befestigungsvorrichtung (17) eine Stützbalkenvorrichtung (23) zwischen jenem Teil der Befestigungsvorrichtung (17), welcher zu dem oberen Abschnitt (16) der Lenkvorrichtung (15) hin liegt, und der Stützstruktur (22) des Fahrzeugs (10) ist.

4. Lenkvorrichtung zum Verringern der Gefahr einer Verletzung eines Fahrers eines dreirädrigen Fahrzeugs nach Anspruch 3, **dadurch gekennzeichnet, dass** die Stützbalkenvorrichtung (23) in der normalen Fahrtrichtung des Fahrzeugs (10) gesehen vor jenem Teil (20) der Befestigungsvorrichtung (17) angeordnet ist, in welchem das Vorderrad (14), die Radbefestigung (19), der Zwischenteil (18) und der obere Abschnitt (16) der Lenkvorrichtung (15) gestützt werden.

5. Lenkvorrichtung zum Verringern der Gefahr einer Verletzung eines Fahrers eines dreirädrigen Fahrzeugs nach Anspruch 2, 3 oder 4, **dadurch gekennzeichnet, dass** die Befestigungskomponente (21) und die Befestigung der Stützbalkenvorrichtung (23) an der Stützstruktur (22) des Fahrzeugs (10) eine Einheit bilden.

6. Lenkvorrichtung zum Verringern der Gefahr einer Verletzung eines Fahrers eines dreirädrigen Fahrzeugs nach Anspruch 1, **dadurch gekennzeichnet, dass** das Befestigungselement an der Befestigungsvorrichtung (17) aus einer Platte (27) besteht.

7. Lenkvorrichtung zum Verringern der Gefahr einer Verletzung eines Fahrers eines dreirädrigen Fahrzeugs nach Anspruch 6, **dadurch gekennzeichnet, dass** das verformbare Element an der Befestigungsvorrichtung (17) ein vorderer Verschluss (28) ist, der in der normalen Fahrtrichtung des Fahrzeugs (10) gesehen zwischen der Platte (27) der Befestigungsvorrichtung (17) und der Stützstruktur (22) des Fahrzeugs (10) vor jenem Teil (20) der Befestigungsvorrichtung (17) angeordnet ist, in welchem das Vorderrad (14), die Radbefestigung (19), der Zwischenteil (18) und der obere Abschnitt (16) der Lenkvorrichtung (15) gestützt werden.

8. Lenkvorrichtung zum Verringern der Gefahr einer Verletzung eines Fahrers eines dreirädrigen Fahrzeugs nach Anspruch 7, **dadurch gekennzeichnet, dass** der vordere Verschluss (28) eine Mutter- und Bolzenanordnung enthält.

9. Lenkvorrichtung zum Verringern der Gefahr einer Verletzung eines Fahrers eines dreirädrigen Fahrzeugs nach einem der Ansprüche 6, 7 oder 8, **dadurch gekennzeichnet, dass** die Platte (27) einen Abschnitt (30) zwischen dem Randabschnitt der Platte (27), welcher in der normalen Fahrtrichtung des Fahrzeugs (10) gesehen hinter jenem Teil (20) der Befestigungsvorrichtung (17) liegt, in welchem das Vorderrad (14), die Radbefestigung (19), der Zwischenteil (18) und der obere Abschnitt (16) der Lenkvorrichtung (15) gestützt werden, und der Verbindung der Platte (27) mit jenem Teil (20) der Befestigungsvorrichtung (17) aufweist, in welchem das Vorderrad (14), die Radbefestigung (19), der Zwischenteil (18) und der obere Abschnitt (16) der Lenkvorrichtung (15) gestützt werden, wobei sich der Abschnitt (30) der Platte (27) verformen wird, wenn sich das Vorderrad (14) des Fahrzeugs (10) nach hinten bewegt, nachdem der vordere Verschluss (28) verformt worden ist.

10. Lenkvorrichtung zum Verringern der Gefahr einer Verletzung eines Fahrers eines dreirädrigen Fahrzeugs nach einem der vorherigen Ansprüche, **dadurch gekennzeichnet, dass** das verformbare Element (23, 28), welches sich verformt, wenn das Vorderrad (14) des Fahrzeugs (10) nach hinten gedrückt wird, in der normalen Fahrtrichtung des Fahrzeugs gesehen, mit einer Aktivierungsvorrichtung (42) verbunden ist, welche bei einem Frontalaufprall durch den vorderen Abschnitt (43) des Fahrzeugs (10) aktiviert werden wird.

11. Lenkvorrichtung zum Verringern der Gefahr einer Verletzung eines Fahrers eines dreirädrigen Fahrzeugs nach Anspruch 10, **dadurch gekennzeichnet, dass** die Aktivierungsvorrichtung (42) einen Energieaufnahmeabschnitt aufweist.

12. Dreirädriges Fahrzeug mit einem Fahrerbereich (11) an dem vorderen Abschnitt des Fahrzeugs (10) im Zentrum des Fahrzeugs (10), senkrecht zu der normalen Fahrtrichtung des Fahrzeugs (10) gesehen, wobei der Fahrerbereich eine Lenkvorrichtung (15) aufweist, **dadurch gekennzeichnet, dass** die Lenkvorrichtung (15) dem Fahrzeug (10) nach einem der Ansprüche 1 bis 11 entspricht.

## Revendications

1. Dispositif de direction pour réduire le risque de blessure d'un conducteur d'un véhicule à trois roues dans une collision frontale, dans lequel le véhicule (10) a une structure de support (22) avec une zone conducteur (11) au niveau de la section avant du véhicule (10), dans le centre du véhicule (10), vu perpendiculairement à la direction de circulation normale du véhicule (10), dans lequel le dispositif de direction (15) a une direction principalement verticale, dans lequel le dispositif de direction (15) est constitué de la roue avant (14) du véhicule (10), une fixation de roue (19), une partie intermédiaire (18), une section de sommet (16), avec laquelle le conducteur manoeuvre le dispositif de direction (15) et un dispositif de fixation (17), dans lequel le dispositif de fixation (17) se trouve entre la fixation de rue (19) du dispositif de direction (15) et la section de sommet (16) du dispositif de fixation (15), dans lequel la roue avant (14) du dispositif de direction (15), la fixation de roue (19), la partie intermédiaire (19) et la section de sommet (16) sont soutenus de manière tournante dans le dispositif de fixation (17) et en ce que le dispositif de fixation (17) est fixé à la structure de support (22) du véhicule (10), **caractérisé en ce que** la roue avant (14) du véhicule (10), la fixation de roue (19), la partie intermédiaire(18) et la section de sommet (16) forment une unité rigide, **en ce que** le dispositif de fixation (17) possède un élément de fixation (21, 27) disposé au niveau de la partie du dispositif de fixation (17) qui est dirigée vers la roue avant (14) du véhicule (10), principalement perpendiculaire à la direction principalement verticale du dispositif de direction (15), **en ce que** l'élément de fixation (21, 27) est soutenu contre la structure de support (22) du véhicule (10) sur la côté de la structure de support (22) du véhicule (10) qui est dirigé vers la roue avant (14) du véhicule (10), **en ce que** le dispositif de fixation (17) possède au moins un dispositif déformable (23, 28) qui se déforme lorsque la roue avant (14) du véhicule (10) est poussée vers l'arrière, vu dans la direction de circulation normale du véhicule, avec une force supérieure à une valeur prédéterminée, de sorte que la section supérieure (16) du dispositif de direction (15) se déplace vers l'avant, vue dans la direction de circulation normale du véhicule.

2. Dispositif de direction pour réduire le risque de blessure d'un conducteur d'un véhicule à trois roues selon la revendication 1, **caractérisé en ce que** l'élément de fixation au niveau du dispositif de fixation (17) est constitué d'un composant de fixation (21) qui est fixé à la structure de support (22) du véhicule (10) d'une manière telle qu'un mouvement minimal, principalement perpendiculaire à la direction de circulation normale du véhicule (10) puisse avoir lieu entre le composant de fixation (21) et la structure de support (22) du véhicule (10).

3. Dispositif de direction pour réduire le risque de blessure d'un conducteur d'un véhicule à trois roues selon la revendication 1 ou 2, **caractérisé en ce que** le dispositif déformable au niveau du dispositif de fixation (17) est un dispositif d'entretoise (23) entre cette partie du dispositif de fixation (17) qui est dirigé vers la section de sommet (16) du dispositif de direction (15) et la structure de support (22) du véhicule (10).

4. Dispositif de direction pour réduire le risque de blessure d'un conducteur d'un véhicule à trois roues selon la revendication 3, **caractérisé en ce que** le dispositif d'entretoise (23) est disposé à l'avant de la partie (20) du dispositif de fixation (17) dans laquelle a roue avant (14), la fixation de roue (19), la partie intermédiaire (18) et la section de sommet (16) du dispositif de direction (15) sont soutenues, vu dans la direction de circulation normale du véhicule (10).

5. Dispositif de direction pour réduire le risque de blessure d'un conducteur d'un véhicule à trois roues selon la revendication 2, 3 ou 4, **caractérisé en ce que** le composant de fixation (21) et la fixation du dispositif d'entretoise (23) à la structure de support (22) du véhicule (10) forment une unité.

6. Dispositif de direction pour réduire le risque de blessure d'un conducteur d'un véhicule à trois roues selon la revendication 1, **caractérisé en ce que** l'élément de fixation au niveau du dispositif de fixation (17) est constitué d'une plaque (27).

7. Dispositif de direction pour réduire le risque de blessure d'un conducteur d'un véhicule à trois roues selon la revendication 6, **caractérisé en ce que** l'élément déformable au niveau du dispositif de fixation (17) est une fixation avant (28), disposée entre la plaque (27) du dispositif de fixation (17) et la structure de support (22) du véhicule (10) à l'avant de cette partie (20) du dispositif de fixation (17) dans laquelle la roue avant (14), la fixation de roue (19), la partie intermédiaire (18) et la section de sommet (16) du dispositif de direction (15) sont soutenues, vu dans la direction de circulation normale du véhicule (10).

8. Dispositif de direction pour réduire le risque de blessure d'un conducteur d'un véhicule à trois roues selon la revendication 7, **caractérisé en ce que** le dispositif de fixation avant (28) contient un dispositif d'écrou et boulon.

9. Dispositif de direction pour réduire le risque de blessure d'un conducteur d'un véhicule à trois roues selon une quelconque des revendications 6, 7 ou 8, **caractérisé en ce que** la plaque (27) possède une section (30) entre la section de bord de la plaque (27), qui se trouve derrière la partie (20) du dispositif de fixation (17) dans laquelle a roue avant (14), la fixation de roue (19), la partie intermédiaire (18) et la section de sommet (16) du dispositif de direction (15) sont soutenues, vu dans la direction de circulation normale du véhicule (10), et le raccordement de la plaque (27) à cette partie (20) du dispositif de fixation (17)dans laquelle la roue avant (14), la fixation de roue (19), la partie intermédiaire (18) et la section de sommet (16) du dispositif de direction (15) sont soutenues, dans lequel la section (30) de la plaque (27) se déformera lorsque la roue avant (14) du véhicule (10) se déplace vers l'arrière après que la fixation avant (28) a été déformée.

10. Dispositif de direction pour réduire le risque de blessure d'un conducteur d'un véhicule à trois roues selon une quelconque des revendications précédentes, **caractérisé en ce que** l'élément déformable (23, 28) qui se déforme lorsque la roue avant (14) du véhicule (10) est poussée vers l'arrière, vu dans la direction de circulation normale du véhicule, est raccordée avec un dispositif d'activation (42) qui sera activée par la section avant (43) du véhicule (10) dans une collision frontale.

11. Dispositif de direction pour réduire le risque de blessure d'un conducteur d'un véhicule à trois roues selon la revendication 10, **caractérisé en ce que** le dispositif d'activation (42) possède une section d 'absorption d'énergie.

12. Véhicule à trois roues avec une zone conducteur (11) au niveau de la section avant du véhicule (10), au centre du véhicule (10), vue perpendiculaire à la direction de circulation normale du véhicule (10), dans lequel la zone conducteur possède un dispositif de direction (15), **caractérisé en ce que** le dispositif de direction (15) du véhicule (10) est conforme à une quelconque des revendications 1 à 11.
